# EUROPEAN PATENT APPLICATION

(11) **EP 4 721 906 A1**
(43) Date of publication of application: **08.04.2026**
(21) Application number: 24810848.2
(22) Date of filing: 26.04.2024
(51) Int. Cl.: B23K 20/04, B23K 26/21, H01M 50/516, H01M 50/522, H01M 50/543, H01M 50/548, H01M 50/562, H01M 50/566

(54) **CLADDING MATERIAL FOR LASER WELDING, BONDING STRUCTURE USING CLADDING MATERIAL FOR LASER WELDING, AND BATTERY MANUFACTURING METHOD**

(30) Priority: 25.05.2023 JP 2023085885
(71) Applicant: Proterial, Ltd., Tokyo 135-0061 (JP)
(72) Inventor: KATO, Kimiyasu, Suita-shi, Osaka 564-0043 (JP); ODA, Yoshimitsu, Suita-shi, Osaka 564-0043 (JP); YOKOYAMA, Shinichiro, Tokyo 135-0061 (JP)
(74) Representative: Hoffmann Eitle
(86) International application number: PCT/JP2024/016566
(87) International publication number: WO 2024/241840

(57) **Abstract**

A cladding material (1) for laser welding includes an Al layer (1a) and an Fe layer (1b), the Al layer has a thickness of 20 µm or more and 140 µm or less, and the cladding material for laser welding is laser-welded to another member by laser irradiation from a side of the Al layer.

## Description

### Technical Field

The present invention relates to a cladding material for laser welding, a joint structure using a cladding material for laser welding, and a method for manufacturing a battery.

### Background Art

Conventionally, in assembled batteries for vehicle use and other applications requiring impact resistance, there is a known configuration including a plurality of batteries each having a structure in which a busbar and a terminal are joined together. An assembled battery having such a structure is disclosed in Japanese Patent Laid-Open No. 2008-066001, for example.

Japanese Patent Laid-Open No. 2008-066001 discloses an assembled battery (battery pack) that is suitable for vehicle use and includes a plurality of batteries. In Japanese Patent Laid-Open No. 2008-066001, the plurality of batteries are arranged side by side, and adjacent batteries thereof are connected to each other by busbars (lead plates). Furthermore, the busbars are welded to terminals of the batteries.

Although not disclosed in Japanese Patent Laid-Open No. 2008-066001, the terminals of the batteries may be made of an iron-based alloy and the busbars may be made of pure aluminum or an aluminum alloy. When a battery terminal made of an iron-based alloy is welded to a busbar made of pure aluminum or an aluminum alloy, a brittle intermetallic compound is formed at a joint between the battery terminal and the busbar due to the welding of dissimilar metals, and the joint strength is disadvantageously reduced.

Therefore, it has been proposed to place a clad insert material between the busbar and the battery terminal, as disclosed in Japanese Patent Laid-Open No. 7-155964, for example.

Japanese Patent Laid-Open No. 7-155964 discloses a clad insert material suitable for resistance welding, which is configured by overlapping and joining steel and aluminum. In Japanese Patent Laid-Open No. 7-155964, a steel layer of the clad insert material, which is made of an iron-based alloy, is resistance welded to a surface-treated steel sheet, and an aluminum layer of the clad insert material is resistance welded to an aluminum sheet. Specifically, resistance welding is performed by sandwiching the surface-treated steel sheet, the clad insert material, and the aluminum sheet, which are overlapped in this order, between a pair of resistance welding electrodes.

### Prior Art Document

### Patent Document

Patent Document 1: Japanese Patent Laid-Open No. 2008-066001
Patent Document 2: Japanese Patent Laid-Open No. 7-155964

### Summary of the Invention

### Problems to be Solved by the Invention

Resistance welding is a welding method for melting and welding a welded portion using Joule heat generated at the welded portion due to contact resistance between metals being welded or Joule heat generated due to the resistance of the metals being welded themselves. Resistance welding involves a considerably large energy loss when a narrow portion is welded because the generated heat is easily lost by conduction to the metals being welded and electrodes. Therefore, the clad insert material disclosed in Japanese Patent Laid-Open No. 7-155964 Japanese Patent Laid-Open No. 7-155964 conceivably includes the aluminum layer having a thickness of more than 0.2 mm (claim 1 of Japanese Patent Laid-Open No. 7-155964 Japanese Patent Laid-Open No. 7-155964), which is easily melted with a smaller amount of heat. Therefore, a clad insert material used in a welding method for melting and joining a joint, such as resistance welding, conceivably needs to ensure (sufficiently increase) the thickness of an aluminum layer with a low melting point.

When the clad insert material disclosed in Japanese Patent Laid-Open No. 7-155964 is used for resistance welding, the pair of electrodes need to be arranged to sandwich the clad insert material. However, depending on the structure of the assembled battery, the space may be small, and it may be difficult to arrange electrodes for each battery. In such a case, laser welding, which does not require electrodes as in resistance welding and is advantageous for space saving, has been proposed. When a clad insert material is used for laser welding in which the welded portion is melted and joined by laser irradiation, it is also conceivably necessary to ensure (sufficiently increase) a sufficient thickness of the aluminum layer with a low melting point.

In recent years, the rapid spread of electric vehicles, driven by environmental issues such as global warming, has led to a strong demand for improved performance and downsizing (miniaturization) of in-vehicle assembled batteries. Therefore, there is an urgent need to improve the performance of assembled batteries and to downsize numerous joint structures of the assembled batteries. However, the clad insert material disclosed in Japanese Patent Laid-Open No. 7-155964 requires the aluminum layer to have a sufficiently large thickness, and thus it is difficult to achieve downsizing.

The present invention is intended to solve the above problem of downsizing a joint structure of an assembled battery, and aims to provide a cladding material for laser welding, a joint structure using a cladding material for laser welding, and a method for manufacturing a battery, which are suitable for laser welding that enables downsizing of a joint structure involving joining dissimilar metals and a reduction in the size of a space required to place the joint structure.

### Means for Solving the Problems

In order to attain the aforementioned object, the inventors of the present invention focused on the structure of the aluminum layer (Al layer) of the clad insert material disclosed in Patent Document 2, and conducted earnest studies to create a cladding material (clad insert material) suitable for laser welding, and discovered the following structure. That is, a cladding material for laser welding according to a first aspect of the present invention is to be laser-welded to another member made of an iron-based alloy, and includes an Al layer made of pure aluminum or an aluminum alloy, and an Fe layer made of an iron-based alloy and roll-bonded to the Al layer. The Al layer has a thickness of 20 µm or more and 140 µm or less, and the Fe layer is laser-welded to another member by laser irradiation from a side of the Al layer.

As described above, the cladding material for laser welding according to the first aspect of the present invention includes the Al layer made of pure aluminum or an aluminum alloy, and the Fe layer made of an iron-based alloy and roll-bonded to the Al layer. The thickness of the Al layer is 20 µm or more and 140 µm or less, and the cladding material for laser welding is laser-welded to another member by laser irradiation from the side of the Al layer. When the thickness of the Al layer is 20 µm or more, the Al layer, which has a melting point sufficiently lower than the melting point of the Fe layer, is quickly melted by laser irradiation from the side of the Al layer, and thus heat can be quickly transferred from the molten Al layer to the Fe layer, and penetration of the cladding material for laser welding in the thickness direction can be quickly performed. Consequently, when the cladding material for laser welding is joined to another member made of an iron-based alloy, it is possible to provide the cladding material for laser welding to which general laser welding that does not involve a large energy loss unlike resistance welding is applicable.

Furthermore, when the thickness of the Al layer is 140 µm or less, an appropriate amount of Al (the thickness of the Al layer) suitable for laser welding is ensured while an excessive amount of Al (the thickness of the Al layer) is not present, and thus an excessive increase in the thickness of the cladding material for laser welding can be reduced or prevented. Consequently, the entire cladding material for laser welding can be thinned, and thus a joint structure in which dissimilar metals are joined together using the cladding material for laser welding can be downsized.

Furthermore, when the thickness of the Al layer is 20 µm or more and 140 µm or less, the protrusion height of a protrusion formed on the laser irradiation side of the Al layer due to a volume change caused by solidification of the Al layer melted by laser irradiation can be reduced. Consequently, the protrusion height of the protrusion formed on an exposed surface of the Al layer due to laser welding is reduced to enable the entire cladding material for laser welding to be thinner, and thus the joint structure in which dissimilar metals are joined together using the cladding material for laser welding can be downsized. The inventors of the present invention have found through experiments (Examples) described below that the above-mentioned advantageous effects can be achieved by setting the thickness of the Al layer to 20 µm or more and 140 µm or less. Furthermore, the joint structure can be downsized such that a space required to place the joint structure can be reduced. Consequently, the joint structure involving joining dissimilar metals can be downsized, and the space required to place the joint structure can be reduced.

In the cladding material for laser welding according to the first aspect, the thickness of the Al layer is preferably 40 µm or more and 140 µm or less. Accordingly, the proportion of the volume change caused by solidification of the Al layer melted by laser irradiation within the Al layer is increased, and thus it has been found through experiments described below that the protrusion height of the protrusion formed on the exposed surface of the Al layer on the laser irradiation side can be further reduced.

A joint structure using a cladding material for laser welding according to a second aspect of the present invention includes the cladding material for laser welding including an Al layer made of pure aluminum or an aluminum alloy and having a thickness of 20 µm or more and 140 µm or less, and an Fe layer made of an iron-based alloy and roll-bonded to the Al layer, and another member made of an iron-based alloy and laser-welded to the Fe layer. The Fe layer is laser-welded to another member by laser irradiation from a side of the Al layer.

In the joint structure using the cladding material for laser welding according to the second aspect of the present invention, as described above, the cladding material for laser welding includes the Al layer made of pure aluminum or an aluminum alloy and having the thickness of 20 µm or more and 140 µm or less, and the Fe layer made of an iron-based alloy and roll-bonded to the Al layer, and is laser-welded to another member by laser irradiation from the side of the Al layer. When the thickness of the Al layer is 20 µm or more, the Al layer, which has a melting point sufficiently lower than the melting point of the Fe layer, is quickly melted by laser irradiation from the side of the Al layer. Thus, heat can be quickly transferred from the molten Al layer to the Fe layer, and penetration of the cladding material for laser welding in the thickness direction can be quickly performed. Consequently, as described above, general laser welding is applicable, and thus it is possible to provide a welded structure involving joining dissimilar metals by laser welding using the cladding material for laser welding.

Furthermore, when the thickness of the Al layer is 140 µm or less, an appropriate amount of Al (the thickness of the Al layer) suitable for laser welding is ensured, while an excessive amount of Al (the thickness of the Al layer) is not present, and thus an excessive increase in the thickness of the cladding material for laser welding can be reduced or prevented. Consequently, as described above, the joint structure in which dissimilar metals are joined together using the cladding material for laser welding can be downsized.

Moreover, when the thickness of the Al layer is 20 µm or more and 140 µm or less, the protrusion height of a protrusion formed on the laser irradiation side of the Al layer due to a volume change caused by solidification of the Al layer melted by laser irradiation can be reduced. Consequently, as described above, the joint structure in which dissimilar metals are joined together using the cladding material for laser welding can be downsized. The inventors of the present invention have found through experiments (Examples) described below that the above-mentioned advantageous effects can be achieved by setting the thickness of the Al layer to 20 µm or more and 140 µm or less. Furthermore, the joint structure can be downsized, and thus a space required to place the joint structure can be reduced. Consequently, the joint structure involving joining dissimilar metals can be downsized, and the space required to place the joint structure can be reduced.

In the joint structure using the cladding material for laser welding according to the second aspect, a molten portion formed at a joint surface between the Fe layer and the another member joined by laser welding preferably has a length of 40 µm or more in a direction in which the joint surface extends. Accordingly, the joint strength between the cladding material for laser welding and another member can be appropriately increased. The inventors of the present invention have found through experiments (examples) described below that the above-mentioned advantageous effect can be achieved by setting the length of the molten portion in the direction in which the joint surface extends to 40 µm or more.

In the joint structure using the cladding material for laser welding according to the second aspect, a protrusion formed on an exposed surface of the Al layer opposite to a surface to which the Fe layer is roll-bonded by laser irradiation from the side of the Al layer preferably has a protrusion height of 20 µm or less. Accordingly, the protrusion height of the protrusion is sufficiently small, and thus contact of the protrusion with members other than the cladding material for laser welding can be reduced or prevented. Consequently, it is possible to reduce or prevent the risk of the protrusion being damaged by contact with members other than the cladding material for laser welding, which could otherwise cause instability in the operation of the joint structure and an assembled battery due to fragments of the damaged protrusion.

In such a case, the thickness of the Al layer is preferably 40 µm or more and 140 µm or less, and the protrusion height of the protrusion formed on the exposed surface of the Al layer opposite to the surface to which the Fe layer is roll-bonded by laser irradiation from the side of the Al layer to a side of the Fe layer is preferably 15 µm or less. Accordingly, the protrusion height of the protrusion is 15 µm or less, and thus contact of the protrusion with members other than the cladding material for laser welding can be further reduced or prevented. Consequently, the risk of instability in the operation of the joint structure and the assembled battery due to contact of the protrusion with members other than the cladding material for laser welding can be further reduced or prevented. The inventors of the present invention have found through experiments described below that the protrusion height of the protrusion can be set to 15 µm or less by setting the thickness of the Al layer to 40 µm or more and 140 µm or less.

A method for manufacturing a battery according to a third aspect of the present invention includes preparing a cladding material for laser welding including an Al layer having a thickness of 20 µm or more and 140 µm or less, and an Fe layer by roll-bonding an Al plate material made of pure aluminum or an aluminum alloy and an Fe plate material made of an iron-based alloy, joining a battery terminal member made of an iron-based alloy to the Fe layer, wire-bonding a first end of an Al-based bonding wire to the Al layer, and wire-bonding a second end of the Al-based bonding wire to a busbar made of pure aluminum or an aluminum alloy.

As described above, the method for manufacturing the battery according to the third aspect of the present invention includes preparing the cladding material for laser welding including the Al layer having the thickness of 20 µm or more and 140 µm or less, and the Fe layer by roll-bonding the Al plate material made of pure aluminum or an aluminum alloy and the Fe plate material made of an iron-based alloy. When the thickness of the Al layer is 20 µm or more, the Al layer, which has a melting point sufficiently lower than the melting point of the Fe layer, is quickly melted by laser irradiation from the side of the Al layer. Thus, heat can be quickly transferred from the molten Al layer to the Fe layer, and penetration of the cladding material for laser welding in the thickness direction can be quickly performed. Consequently, as described above, the battery can be manufactured by applying general laser welding.

Furthermore, when the thickness of the Al layer is 140 µm or less, an appropriate amount of Al suitable for laser welding is ensured, while an excessive amount of Al (the thickness of the Al layer) is not present, and thus an excessive increase in the thickness of the cladding material for laser welding can be reduced or prevented. Consequently, as described above, the cladding material for laser welding is advantageous for downsizing a joint structure in which dissimilar metals are joined together, and thus it is possible to manufacture the battery that can be downsized appropriately. Furthermore, the joint structure can be downsized, and thus a space required to place the joint structure can be reduced. Thus, the battery that can be downsized can be manufactured.

Moreover, when the thickness of the Al layer is 20 µm or more and 140 µm or less, the protrusion height of the protrusion formed on the laser irradiation side of the Al layer due to a volume change caused by solidification of the Al layer melted by laser irradiation can be reduced. Consequently, as described above, the cladding material for laser welding is advantageous for downsizing the joint structure in which dissimilar metals are joined together, and thus it is possible to manufacture the battery that can be downsized appropriately. The inventors of the present invention have found through experiments (Examples) described below that the above-mentioned advantageous effects can be achieved by setting the thickness of the Al layer to 20 µm or more and 140 µm or less. Consequently, the joint structure involving joining dissimilar metals can be downsized, and the space required to place the joint structure can be reduced.

### Advantageous Effect of the Invention

According to the present invention, it is possible to provide the cladding material for laser welding, the joint structure using the cladding material for laser welding, and the method for manufacturing a battery, which are suitable for laser welding that enables downsizing of the joint structure involving joining dissimilar metals and a reduction in the size of a space required to place the joint structure.

### Brief Description of the Drawings

FIG. 1 is a diagram showing an assembled battery according to the present embodiment.
FIG. 2 is a diagram showing an example of a cladding material for laser welding according to the present embodiment.
FIG. 3 is a diagram showing a state in which the cladding material for laser welding according to the present embodiment and a lid member are joined together.
FIG. 4 is a diagram showing a laser irradiation position for the cladding material for laser welding when the cladding material for laser welding according to the present embodiment is laser-welded to a battery terminal.
FIG. 5 is a sectional diagram of a portion of a joint structure using the cladding material for laser welding, showing a state in which the cladding material for laser welding is laser-welded to the lid material.
FIG. 6 is a diagram showing an example of a single battery according to the present embodiment.
FIG. 7 is a diagram showing a method for manufacturing the cladding material for laser welding according to the present embodiment.
FIG. 8 is a diagram for illustrating a method for joining the cladding material for laser welding according to the present embodiment to the battery terminal.
FIG. 9 is a diagram for illustrating a wire bonding method according to the present embodiment.
FIG. 10 is a graph showing the relationship between the thickness of an Al layer of the cladding material for laser welding and the joint strength, melting width, penetration depth, and protrusion height.
FIG. 11 is a diagram showing an assembled battery according to a modified example.

### Modes for Carrying Out the Invention

An embodiment of the present invention is hereinafter described on the basis of the drawings.

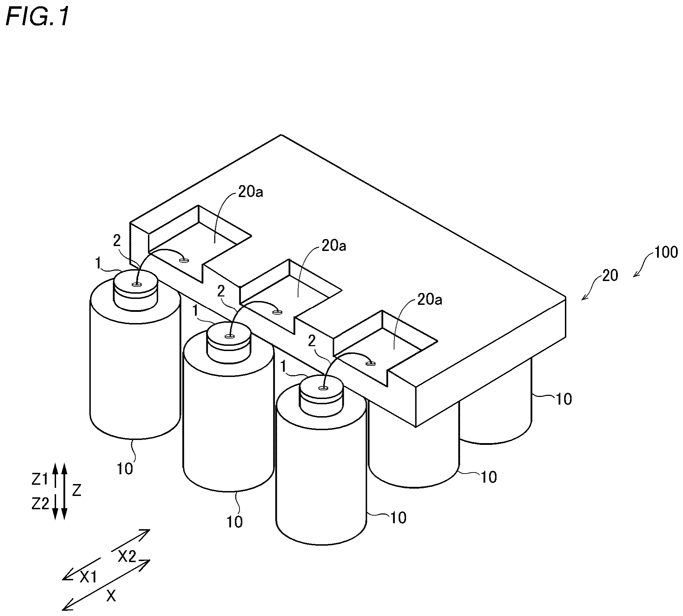

As shown in FIG. 1, a cladding material 1 for laser welding according to the embodiment of the present invention is used in an assembled battery 100. The assembled battery 100 includes a plurality of lithium-ion secondary batteries 10 electrically connected to each other by a busbar 20. While FIG. 1 shows a simplified representation of the assembled battery 100, the number of lithium-ion secondary batteries 10 of the in-vehicle assembled battery 100, for example, is greater than that shown in FIG. 1. The in-vehicle assembled battery 100 is a large battery system installed in an electric vehicle (EV) or a hybrid electric vehicle (HEV). The assembled battery 100 is an example of a "battery" in the claims.

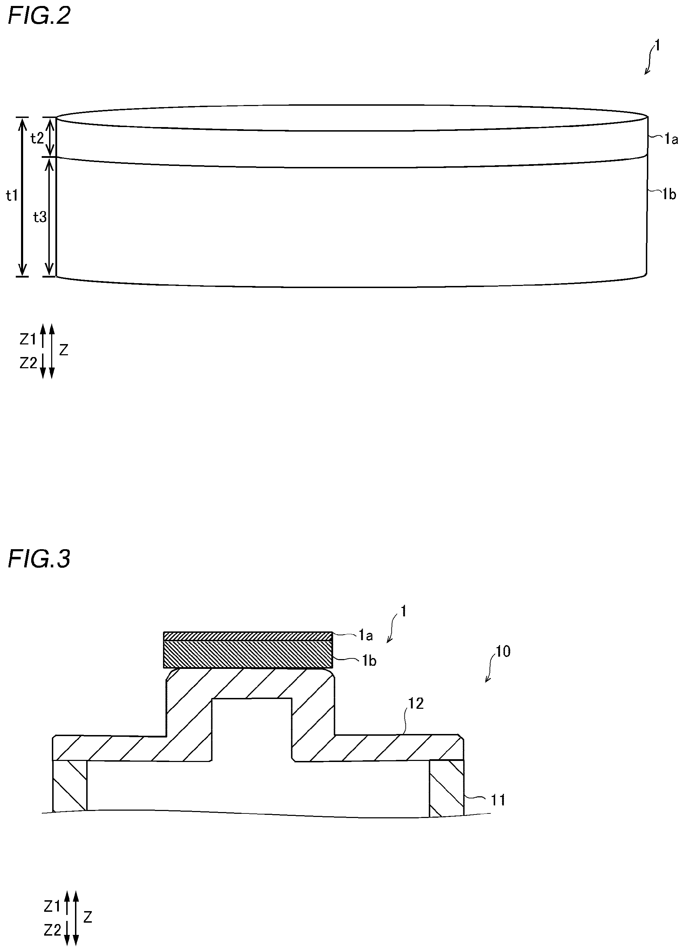

As shown in FIG. 2, the cladding material 1 for laser welding includes an Al layer 1a and an Fe layer 1b. In FIG. 2, the cladding material 1 for laser welding has a circular shape, but the shape of the cladding material 1 for laser welding is not limited to this.

The Al layer 1a is made of pure aluminum or an aluminum alloy. The pure aluminum contains between 99% and 100% aluminum, such as materials in the JIS A1000 series, including A1050. The aluminum alloy is an alloy in which another element such as Mn or Mg is added to Al, such as materials in the JIS A3000 series, including A3003 or materials in the JIS A5000 series, including A5052.

The Fe layer 1b is made of an iron-based alloy. The iron-based alloy is an alloy in which Fe has the highest content among the constituent metallic elements. Among iron-based alloys, those containing about 10 mass % or more of Cr are classified as stainless steel. From the viewpoint of durability, the iron-based alloy of the Fe layer 1b is preferably an iron-based stainless steel containing 10 mass % or more of Cr. Furthermore, the iron-based alloy of the Fe layer 1b is preferably a ferritic stainless steel, which is a stainless steel that does not contain Ni, in order to reduce a difference in hardness with the Al layer 1a. The ferritic stainless steel is a stainless steel that contains 16 mass % or more and 18 mass % or less of Cr and of which main metal structure is a ferrite phase with a body-centered cubic lattice structure even at room temperature, such as SUS430.

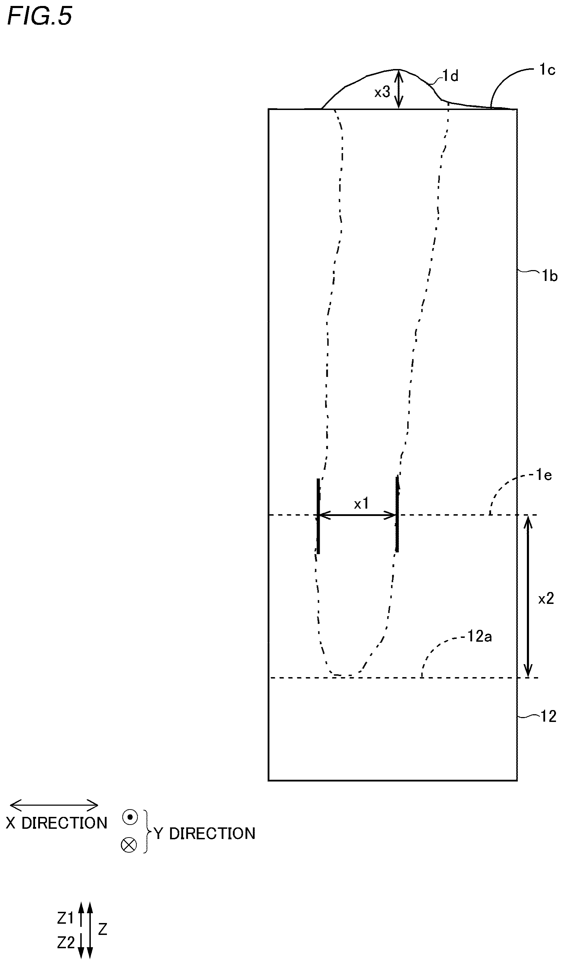

As shown in FIGS. 2 and 5, the overall thickness t1 of the cladding material 1 for laser welding is 200 µm or more and 400 µm or less. The thickness t2 of the Al layer 1a is 20 µm or more and 140 µm or less. The thickness t2 of the Al layer 1a is set to 20 µm or more such that the Al layer 1a, which has a melting point sufficiently lower than the melting point of the Fe layer 1b, can be quickly melted by laser irradiation from the Al layer 1a side, heat can be quickly transferred from the Al layer 1a to the Fe layer 1b, and penetration of the cladding material 1 for laser welding toward the Z2 side in the thickness direction (Z direction) can be quickly performed. The thickness t2 of the Al layer 1a is set to 140 µm or less to reduce or prevent an excessive increase in the overall thickness t1 of the cladding material 1 for laser welding, by ensuring an appropriate amount of Al suitable for laser welding while preventing an excessive amount of Al. Furthermore, the thickness t2 of the Al layer 1a is set to 20 µm or more and 140 µm or less in order to reduce the protrusion height x3 of a protrusion 1d formed on the laser irradiation side of the Al layer 1a due to a volume change caused by solidification of the Al layer melted by laser irradiation.

The thickness t2 of the Al layer 1a is set to 20 µm or more to reduce or prevent peeling of a portion of the Al layer 1a by setting the protrusion height x3 of the protrusion 1d formed on an exposed surface 1c (Z1-side surface) of the Al layer 1a, which is a surface of the Al layer 1a opposite to a surface joined to the Fe layer 1b, to 20 µm or less. The thickness t2 of the Al layer 1a is preferably set to 40 µm or more and 140 µm or less to further reduce or prevent peeling of a portion of the Al layer 1a by setting the protrusion height x3 of the protrusion 1d formed on the exposed surface 1c (Z1-side surface) of the Al layer 1a to 15 µm or less.

As shown in FIG. 3, a terminal (negative or positive terminal) of the lithium-ion secondary battery 10 made of an iron-based alloy is joined to the Fe layer 1b of the cladding material 1 for laser welding. FIG. 3 shows a configuration example in which a lid member 12 made of an iron-based alloy, which serves as a positive electrode terminal, is joined to the Fe layer 1b. The joining method is laser welding. By irradiating the Al layer 1a with a laser from the Z1 side, the Al layer 1a and the Fe layer 1b melt in the Z direction, and a portion of the lid member 12 melts such that the cladding material 1 for laser welding is joined to the lid member 12. The type of laser can be selected depending on various conditions, such as a joint structure, and is not limited. The lid member 12 is an example of "another member" or an "electronic terminal member" in the claims.

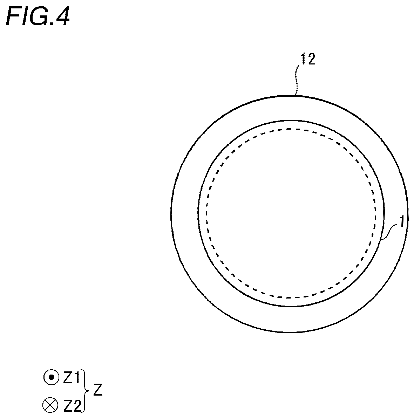

For example, when the cladding material 1 for laser welding has a circular shape, laser irradiation to the Al layer 1a can be performed in a circular shape within an area in which the cladding material 1 for laser welding and the lid member 12 overlap each other, as shown by a dashed line in FIG. 4, which shows a laser irradiation position for the cladding material 1 for laser welding. For example, when the diameter of the cladding material 1 for laser welding and the lid member 12 is about 23 mm, the laser irradiation can be performed in a circular shape with a diameter of about 20 mm or less (15 mm, for example).

For example, when laser irradiation is performed from the Z1 side of the Al layer 1a to laser-weld the cladding material 1 for laser welding to the lid member 12, the cladding material 1 for laser welding melts by the laser irradiation and melts into the lid member 12, as shown by a two-dot chain line in FIG. 5, which shows a portion of the joint structure. At this time, the length (melting width) x1 of a molten portion formed at a joint surface 1e between the Fe layer 1b of the cladding material 1 for laser welding and the lid member 12 joined by laser welding in a direction (X direction) in which the joint surface 1e extends is preferably 40 µm or more. FIG. 5 shows an X-Z cross-section, but the joint surface 1e of the molten portion is parallel to an X-Y plane. Moreover, in FIG. 5, the direction in which the joint surface 1e of the molten portion extends is in the X direction, but may be in a Y direction.

A penetration depth x2 shown in FIG. 5 may be 50 µm or more and 130 µm or less. With this configuration, the lid member 12 can be thinned while being joined to the cladding material 1 for laser welding with an appropriate joint strength. Consequently, the joint structure of dissimilar metals using the cladding material 1 for laser welding can be downsized. The penetration depth refers to an amount (length) melted into the lid member 12 in the Z direction from the joint surface 1e of the molten portion by laser irradiation.

As shown in FIG. 5, the protrusion 1d is formed on the exposed surface 1c of the Al layer 1a, protruding toward the side (Z1 side) opposite to the lid member 12 (Fe layer 1b) due to the volume change caused by solidification of the Al layer 1a melted by laser irradiation. The protrusion height x3 of the protrusion 1d is preferably 20 µm or less in order to reduce or prevent breakage of the protrusion 1d. Furthermore, the protrusion height x3 of the protrusion 1d is more preferably 15 µm or less in order to further reduce or prevent breakage of the protrusion 1d.

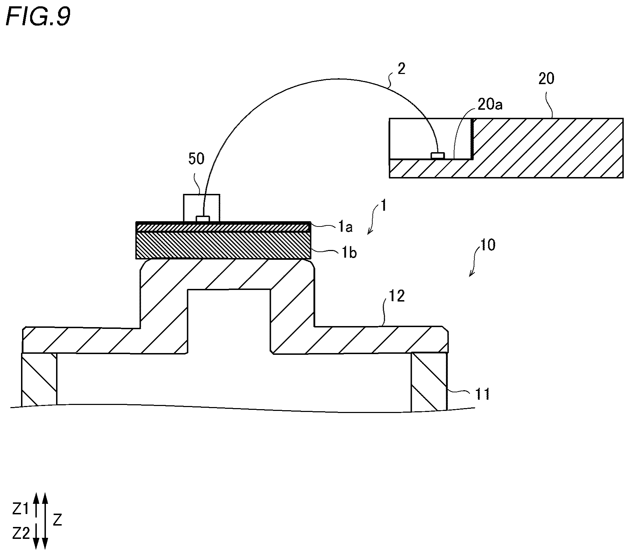

The busbar 20 is bonded to the exposed surface 1c of the Al layer 1a. For the bonding with the busbar 20, wire bonding is used, for example. Specifically, as shown in FIG. 9, a first end of an Al-based bonding wire 2 is wire-bonded to the Al layer 1a, and a second end of the Al-based bonding wire 2 is wire-bonded to a recess 20a of the busbar 20. The Al-based bonding wire 2 is made of pure aluminum or an aluminum alloy.

### Lithium-Ion Secondary Battery

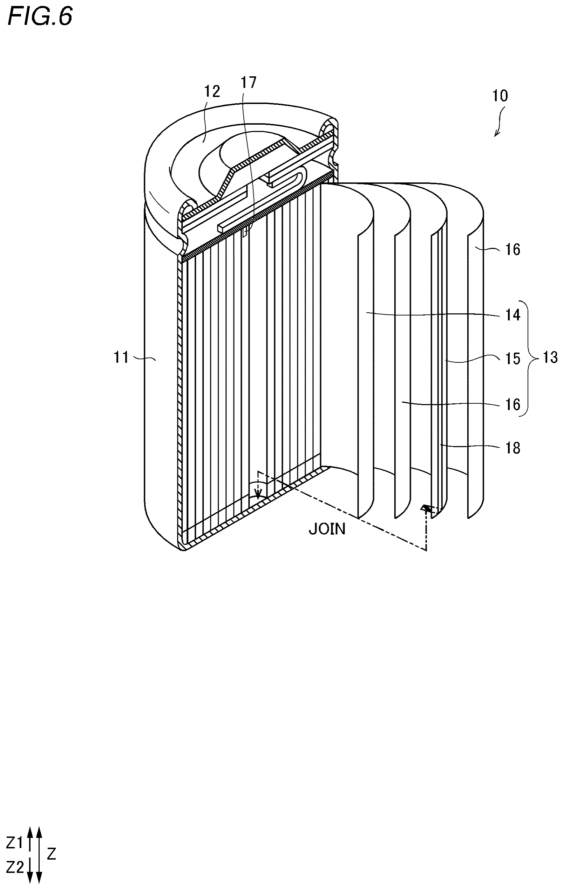

As shown in FIG. 6, the lithium-ion secondary battery 10 includes a cylindrical housing 11, the lid member 12 that seals an opening of the housing 11, and a storage element 13 placed within the housing 11. The housing 11 is made of Ni-plated steel sheet and also defines and functions as the negative terminal of the lithium-ion secondary battery 10.

The housing 11 accommodates the storage element 13 and an electrolyte (not shown). The lid member 12 is made of an iron-based alloy and also defines and functions as the positive terminal of the lithium-ion secondary battery 10. The storage element 13 is formed by winding a positive electrode 14, a negative electrode 15, and an insulating separator 16 disposed between the positive electrode 14 and the negative electrode 15. The positive electrode 14 includes a positive electrode current collector (not shown) made of aluminum foil and a positive electrode active material layer (not shown) disposed on a surface of the positive electrode current collector. The positive electrode active material layer includes a positive electrode active material such as lithium manganese oxide and a binder made of a resin material.

The lithium-ion secondary battery 10 further includes a positive electrode lead 17 for connecting positive electrode 14 to the positive electrode terminal (lid member 12), and negative electrode lead 18 for connecting negative electrode 15 to the negative electrode terminal (casing 11). The lithium-ion secondary battery 10 further includes a positive electrode lead 17 for connecting the positive electrode 14 to the positive terminal (lid member 12), and a negative electrode lead 18 for connecting the negative electrode 15 to the negative terminal (housing 11). The positive electrode lead 17 is made of aluminum foil and is joined to the positive electrode current collector of the positive electrode 14 and the lid member 12 by resistance welding, for example. The negative electrode lead 18 is made of copper foil and is joined to a negative electrode current collector of the negative electrode 15 and the housing 11 by resistance welding, for example.

As shown in FIG. 1, the busbar 20 is made of pure aluminum or an aluminum alloy. The busbar 20 electrically connects the terminals (negative terminal, positive terminal) of the lithium-ion secondary battery 10. In this embodiment, the busbar 20 has a plate-like shape and electrically connects the positive terminals of a plurality of single batteries (lithium-ion secondary batteries 10). In this embodiment, the cladding material 1 for laser welding is disposed between the busbar 20 and the positive terminal of the lithium-ion secondary battery 10. As shown in FIG. 1, the recess 20a is provided in a portion of the busbar 20 to which the Al-based bonding wire 2 is connected. While FIG. 1 shows an example in which the recess 20a is provided on a first side (X1 side) in the short-side direction of the busbar 20, the recess 20a may be provided on both the first side (X1 side) and a second side (X2 side) in the short-side direction. A single busbar 20 can simultaneously connect a plurality of terminals. Although not shown in FIG. 1, the negative terminals are also connected to each other by an additional separate busbar. The negative terminals and the additional busbar are joined together by laser welding or spot welding, for example. The assembled battery 100 shown in FIG. 1 is intended to show the configuration example of a portion at which the positive terminals are connected to each other by the busbar 20, and other connection portions and the like are omitted. The assembled battery may also have a configuration in which the positive terminals and the negative terminals are joined together by a busbar. The assembled battery may also have a configuration in which the positive terminals are connected to each other by a busbar and the negative terminals are connected to each other by a busbar, combined with a configuration in which the positive terminals and the negative terminals are joined together by a busbar.

### Method for Manufacturing Battery

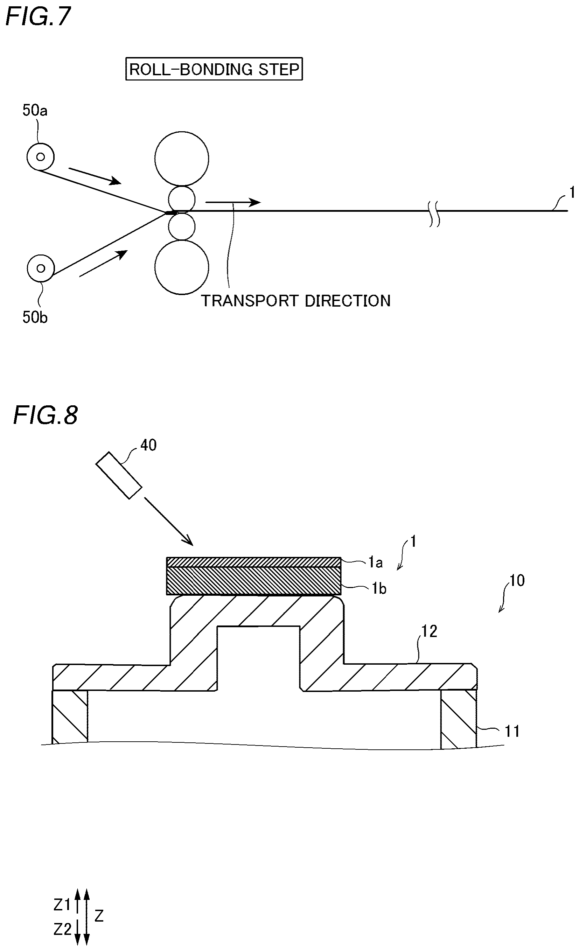

As shown in FIG. 7, the cladding material 1 for laser welding is prepared by roll-bonding an Al plate material 50a and an Fe plate material 50b, and the resulting material includes the Al layer 1a having a thickness of 20 µm or more and 140 µm or less, and the Fe layer 1b. The Al plate material 50a is made of the same pure aluminum or aluminum alloy as the Al layer 1a. The Fe plate material 50b is made of the same iron-based alloy as the Fe layer 1b. In the roll-bonding, the rolling reduction (degree of working) is set such that the thicknesses of the Al plate material 50a and the Fe plate material 50b before rolling correspond to the thicknesses of the Al layer 1a and the Fe layer 1b after rolling. Although not shown in FIG. 7, diffusion annealing may be performed after roll-bonding the Al plate material 50a and the Fe plate material 50b. Furthermore, softening annealing may be performed before the Al plate material 50a and the Fe plate material 50b are roll-bonded. Furthermore, after the Al plate material 50a and the Fe plate material 50b are roll-bonded, further rolling may be performed to obtain the desired thickness of the Al layer 1a and the desired thickness of the Fe layer 1b. Moreover, softening annealing may be performed before further rolling. The prepared cladding material 1 for laser welding is then processed into a circular shape, for example. The cladding material 1 for laser welding may be processed into a circular shape by punching. The diameter of the circularly formed cladding material 1 for laser welding is set to match the diameter of the terminal to be joined.

When the assembled battery 100 shown in FIG. 1 is configured, the Fe layer 1b of the cladding material 1 for laser welding is joined to a battery terminal member, as shown in FIG. 8. In FIG. 8, the battery terminal member is the lid member 12 (positive terminal). Depending on the configuration of the assembled battery, the negative terminal (the outer bottom surface of the housing 11) can also be joined to the Fe layer 1b of the cladding material 1 for laser welding. A method for joining the Fe layer 1b of the cladding material 1 for laser welding to the battery terminal member is laser welding. In laser welding, a laser irradiator 40 is positioned on the Al layer 1a side (Z1 side) and laser irradiation is performed. For example, as shown by the dashed line in FIG. 4, the laser irradiation is performed so as to form a circular trajectory along the outer periphery of the circular cladding material 1 for laser welding. Thus, a joint structure including the cladding material 1 for laser welding and the lid member 12 and involving joining dissimilar metals is formed.

As shown in FIG. 9, after the cladding material 1 for laser welding is joined to the battery terminal member, the busbar 20 is joined to the Al layer 1a. The busbar 20 is joined to the Al layer 1a by wire-bonding the first end of the Al-based bonding wire 2 to the Al layer 1a and by wire-bonding the second end of the Al-based bonding wire 2 to the recess 20a of the busbar 20.

Wire bonding can be performed in two ways: one in which the first end and the second end of the Al-based bonding wire 2 are melted to form a ball-shaped bond, and the other in which no ball-shaped bond is formed. Methods for bonding the first end and the second end of the Al-based bonding wire 2 to the Al layer 1a and the busbar 20, respectively, include a method using heat, a method using pressure, a method using ultrasonic waves, and a method using a suitable combination of heat, pressure, ultrasonic waves, and the like. When ultrasonic waves are used, the first end of the wire is pressed against the Al layer 1a of the cladding material 1 for laser welding with a tool 50, and ultrasonic vibrations are applied to generate heat inside, and melt and bond the first end of the wire and the vicinity of the surface of the Al layer 1a, for example.

### Advantageous Effects of This Embodiment

According to this embodiment, the following advantageous effects are achieved.

In this embodiment, the cladding material 1 for laser welding includes the Al layer 1a made of pure aluminum or an aluminum alloy, and the Fe layer 1b made of an iron-based alloy and roll-bonded to the Al layer 1a. The thickness of the Al layer 1a is 20 µm or more and 140 µm or less, and the cladding material 1 for laser welding is laser-welded to another member by laser irradiation from the Al layer 1a side. When the thickness of the Al layer 1a is 20 µm or more, the Al layer 1a, which has a melting point sufficiently lower than the melting point of the Fe layer 1b, is quickly melted by laser irradiation from the Al layer 1a side, and thus heat can be quickly transferred from the molten Al layer 1a to the Fe layer 1b, and penetration of the cladding material 1 for laser welding in the thickness direction (Z direction) can be quickly performed. Consequently, when the cladding material 1 for laser welding is joined to another member (lid member 12) made of an iron-based alloy, it is possible to provide the cladding material 1 for laser welding to which general laser welding that does not involve a large energy loss unlike resistance welding is applicable. Furthermore, when the thickness of the Al layer 1a is 140 µm or less, an appropriate amount of Al suitable for laser welding is ensured while an excessive amount of Al is not present, and thus an excessive increase in the thickness of the cladding material 1 for laser welding can be reduced or prevented. Consequently, the entire cladding material 1 for laser welding can be thinned, and thus the joint structure in which dissimilar metals are joined together using the cladding material 1 for laser welding can be downsized. Furthermore, when the thickness of the Al layer 1a is 20 µm or more and 140 µm or less, the protrusion height of the protrusion 1d formed on the laser irradiation side (Z1 side) of the Al layer 1a due to the volume change caused by solidification of the Al layer 1a melted by laser irradiation can be reduced. Consequently, the protrusion height of the protrusion 1d formed on the exposed surface 1c of the Al layer 1a due to laser welding can be reduced, enabling the entire cladding material 1 for laser welding to be thinner, which is advantageous for downsizing the joint structure in which dissimilar metals are joined together using the cladding material 1 for laser welding. The inventors of the present invention have found through experiments (Examples) described below that the above-mentioned advantageous effects can be achieved by setting the thickness of the Al layer 1a to 20 µm or more and 140 µm or less. Furthermore, the joint structure can be downsized such that a space required to place the joint structure can be reduced. Consequently, the joint structure involving joining dissimilar metals can be downsized, and the space required to place the joint structure can be reduced.

In this embodiment, the thickness of the Al layer 1a is 40 µm or more and 140 µm or less. Accordingly, the proportion of the volume change caused by solidification of the Al layer 1a melted by laser irradiation within the Al layer 1a is increased, and thus it has been found through experiments described below that the protrusion height of the protrusion 1d formed on the exposed surface 1c of the Al layer 1a on the laser irradiation side (Z1 side) can be further reduced.

Furthermore, in the joint structure using the cladding material 1 for laser welding according to this embodiment, as described above, the cladding material 1 for laser welding includes the Al layer 1a made of pure aluminum or an aluminum alloy and having the thickness t2 of 20 µm or more and 140 µm or less, and the Fe layer 1b made of an iron-based alloy and roll-bonded to the Al layer 1a, and is laser-welded to the lid member 12 by laser irradiation from the Al layer 1a side. Accordingly, when the thickness of the Al layer 1a is 20 µm or more, the Al layer 1a, which has a melting point sufficiently lower than the melting point of the Fe layer 1b, is quickly melted by laser irradiation from the Al layer 1a side (Z1 side). Thus, heat can be quickly transferred from the molten Al layer 1a to the Fe layer 1b, and penetration of the cladding material 1 for laser welding in the thickness direction (Z direction) can be quickly performed. Consequently, as described above, general laser welding is applicable, and thus it is possible to provide a welded structure involving joining dissimilar metals by laser welding using the cladding material 1 for laser welding. Furthermore, when the thickness of the Al layer 1a is 140 µm or less, an appropriate amount of Al suitable for laser welding is ensured, while an excessive amount of Al is not present, and thus an excessive increase in the thickness of the cladding material 1 for laser welding can be reduced or prevented. Consequently, as described above, the joint structure involving joining dissimilar metals by laser welding using the cladding material 1 for laser welding can be downsized. Moreover, when the thickness of the Al layer 1a is 20 µm or more and 140 µm or less, the protrusion height of the protrusion 1d formed on the laser irradiation side (Z1 side) of the Al layer 1a due to the volume change caused by solidification of the Al layer 1a melted by laser irradiation can be reduced. Consequently, as described above, the joint structure involving joining dissimilar metals by laser welding using the cladding material 1 for laser welding can be downsized. The inventors of the present invention have found through experiments (Examples) described below that the above-mentioned advantageous effects can be achieved by setting the thickness of the Al layer 1a to 20 µm or more and 140 µm or less. Furthermore, the joint structure can be downsized, and thus the space required to place the joint structure can be reduced. Consequently, the joint structure involving joining dissimilar metals can be downsized, and the space required to place the joint structure can be reduced.

In this embodiment, the length of the molten portion formed at the joint surface 1e between the Fe layer 1b and another member joined by laser welding in the direction in which the joint surface extends is 40 µm or more. Accordingly, the joint strength between the cladding material 1 for laser welding and another member (lid member 12) can be appropriately increased. The inventors of the present invention have found through experiments (examples) described below that the above-mentioned advantageous effect can be achieved by setting the length of the molten portion in the direction (X direction) in which the joint surface 1e extends to 40 µm or more.

In this embodiment, as described above, the protrusion height of the protrusion 1d formed on the exposed surface 1c of the Al layer 1a opposite to the surface to which the Fe layer 1b is roll-bonded by laser irradiation from the Al layer 1a side is 20 µm or less. Accordingly, the protrusion height of the protrusion 1d is sufficiently small, and thus contact of the protrusion 1d with members other than the cladding material 1 for laser welding can be reduced or prevented. Consequently, it is possible to provide the joint structure that reduces or prevents the risk of the protrusion 1d being damaged by contact with members other than the cladding material 1 for laser welding, which could otherwise cause instability in the operation of the joint structure and the assembled battery due to fragments of the damaged protrusion 1d.

In this embodiment, the thickness of the Al layer 1a is preferably 40 µm or more and 140 µm or less, and when a laser is radiated from the Al layer 1a side (Z1 side) to the Fe layer 1b side, the protrusion 1d formed on the exposed surface 1c of the Al layer 1a opposite to the surface to which the Fe layer 1b is roll-bonded has a protrusion height of 15 µm or less. Accordingly, contact of the protrusion 1d with members other than the cladding material 1 for laser welding can be further reduced or prevented. Consequently, the risk of instability in the operation of the joint structure and the assembled battery due to contact of the protrusion 1d with members other than the cladding material 1 for laser welding can be further reduced or prevented. The inventors of the present invention have found through experiments described below that the protrusion height x3 of the protrusion 1d can be set to 15 µm or less by setting the thickness of the Al layer 1a to 40 µm or more and 140 µm or less.

As described above, the method for manufacturing the battery according to this embodiment includes preparing the cladding material 1 for laser welding including the Al layer 1a having the thickness of 20 µm or more and 140 µm or less, and the Fe layer 1b by roll-bonding the Al plate material 50a made of pure aluminum or an aluminum alloy and the Fe plate material 50b made of an iron-based alloy. When the thickness of the Al layer 1a is 20 µm or more, the Al layer 1a, which has a melting point sufficiently lower than the melting point of the Fe layer 1b, is quickly melted by laser irradiation from the Al layer 1a side (Z1 side). Thus, heat can be quickly transferred from the molten Al layer 1a to the Fe layer 1b, and penetration of the cladding material 1 for laser welding in the thickness direction (Z direction) can be quickly performed. Consequently, as described above, the battery can be manufactured by applying general laser welding. Furthermore, when the thickness of the Al layer 1a is 140 µm or less, an appropriate amount of Al suitable for laser welding is ensured, while an excessive amount of Al is not present, and thus an excessive increase in the thickness of the cladding material 1 for laser welding can be reduced or prevented. Consequently, as described above, the cladding material 1 for laser welding is advantageous for downsizing the joint structure in which dissimilar metals are joined together by laser welding, and thus it is possible to manufacture the battery that can be downsized appropriately. Moreover, when the thickness of the Al layer 1a is 20 µm or more and 140 µm or less, the protrusion height of the protrusion 1d formed on the laser irradiation side of the Al layer 1a due to the volume change caused by solidification of the Al layer 1a melted by laser irradiation can be reduced. Consequently, as described above, the cladding material 1 for laser welding is advantageous for downsizing the joint structure involving joining dissimilar metals by laser welding, and thus it is possible to manufacture the battery that can be downsized appropriately. The inventors of the present invention have found through experiments (Examples) described below that the above-mentioned advantageous effects can be achieved by setting the thickness of the Al layer 1a to 20 µm or more and 140 µm or less. Consequently, the joint structure involving joining dissimilar metals can be downsized, and the space required to place the joint structure can be reduced.

### Examples

Experiments (Examples) conducted to measure and evaluate the joint strength, the melting width x1, the penetration depth x2, and the protrusion height x3 of a protrusion 1d of a laser-welded portion formed by laser welding as shown in FIG. 5 in a joint structure in which a test cladding material 1 for laser welding was joined to another member made of an iron-based alloy by laser welding are now described.

First, six types of cladding material 1 for laser welding (Examples 1 to 5 and Comparative Example 2) were prepared as test specimens each including an Al layer 1a. Each test specimen had an overall thickness t1 of 300 µm and included the Al layer 1a made of A1050 and an Fe layer 1b made of SUS430. The thicknesses t2 of the Al layers 1a are different from each other. Furthermore, an SUS430 single plate (Comparative Example 1) made of ferritic stainless steel and having a thickness of 300 µm was prepared as a test specimen without an Al layer. Moreover, an SUS430 single plate having a thickness of 300 µm was prepared as another member made of an iron-based alloy. The thicknesses t2 of the Al layers 1a of the six types of cladding material 1 for laser welding as test specimens were 10 µm (Comparative Example 2), 20 µm (Example 1), 40 µm (Example 2), 60 µm (Example 3), 90 µm (Example 4), and 140 µm (Example 5).

Next, the Al layers 1a of the test specimens of Examples 1 to 5 and Comparative Example 2 were partially joined to another member by laser welding to prepare joint structures including dissimilar metal joints between A1050 and SUS430. Furthermore, the test specimen of Comparative Example 1 was partially joined to another member by laser welding to prepare a joint structure including a homogeneous metal joint between SUS430 and SUS430. In each joint structure, laser welding was performed by setting a laser output to 300 W and a laser irradiation speed to 500 mm/s, with a laser being radiated in a circular pattern with a diameter of 15 mm on a surface of the Al layer 1a on the Z1 side.

A test to evaluate the joint strength of a laser-welded portion was conducted for the prepared joint structures of Examples 1 to 5 and Comparative Examples 1 and 2. Specifically, a tensile test was conducted for the joint structures of Examples 1 to 5 and Comparative Examples 1 and 2, in which the test specimen and another member were pulled in opposite directions such that a load in the shear direction was applied to the laser-welded portion. In addition, a laser-welded interface (joint surface 1e) was observed with an electron microscope.

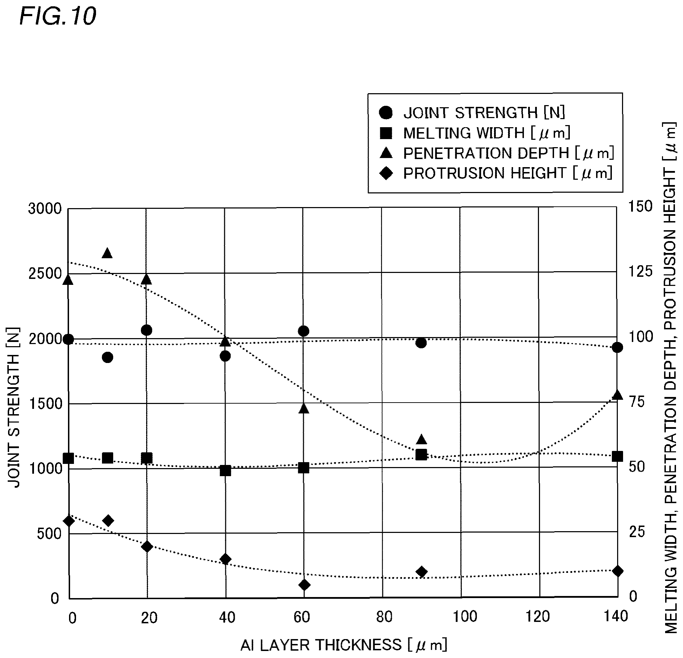

TABLE 1 shows the measured values (joint strength, melting width x1, penetration depth x2, and protrusion height of the protrusion 1d) of the joint structures of Examples 1 to 5 and Comparative Examples 1 and 2 relative to the thicknesses t2 of the Al layers 1a. TABLE 2 shows the ratios (hereinafter referred to as "comparison values") of the measured values of the joint structures of Examples 1 to 5 and Comparative Example 2 relative to the measured values of the joint structure of Comparative Example 1 (Al layer thickness: 0 µm). Furthermore, FIG. 10 shows a graph using the values listed in TABLE 1, plotting the thickness t2 of the Al layer 1a on the horizontal axis, and the joint strength, melting width x1, and penetration depth x2, and protrusion height x3 of the laser-welded portion of each joint structure on the vertical axis. Each dotted line in FIG. 10 is a polynomial approximate (cubic) curve of the thickness t2 of the Al layer 1a and each measured value.

**TABLE 1**

| | | | | JOINT STRENGTH N | MELTING WIDTH µm | PENETRATION DEPTH µm | PROTRUSION HEIGHT µm |
|---|---|---|---|---|---|---|---|
| JOINT STRUCTURE | TEST SPECIMEN | ANOTHER MEMBER | Al LAYER THICKNESS µm | | | | |
| COMPARATIVE EXAMPLE 1 | SUS SINGLE PLATE | SUS SINGLE PLATE | 0 | 1999 | 54 | 123 | 30 |
| COMPARATIVE EXAMPLE 2 | CLADDING MATERIAL | SUS SINGLE PLATE | 10 | 1859 | 54 | 133 | 30 |
| EXAMPLE 1 | CLADDING MATERIAL | SUS SINGLE PLATE | 20 | 2066 | 54 | 123 | 20 |
| EXAMPLE 2 | CLADDING MATERIAL | SUS SINGLE PLATE | 40 | 1865 | 49 | 99 | 15 |
| EXAMPLE 3 | CLADDING MATERIAL | SUS SINGLE PLATE | 60 | 2054 | 50 | 73 | 5 |
| EXAMPLE 4 | CLADDING MATERIAL | SUS SINGLE PLATE | 90 | 1961 | 55 | 61 | 10 |
| EXAMPLE 5 | CLADDING MATERIAL | SUS SINGLE PLATE | 140 | 1921 | 54 | 78 | 10 |

**TABLE 2**

| | | | | COMPARISON VALUES RELATIVE TO COMPARATIVE EXAMPLE 1 | | | |
|---|---|---|---|---|---|---|---|
| JOINT STRUCTURE | TEST SPECIMEN | ANOTHER MEMBER | Al LAYER THICKNESS µm | JOINT STRENGTH N | MELTING WIDTH µm | PENETRATION DEPTH µm | PROTRUSION HEIGHT µm |
| COMPARATIVE EXAMPLE 1 | SUS SINGLE PLATE | SUS SINGLE PLATE | 0 | - | - | - | - |
| COMPARATIVE EXAMPLE 2 | CLADDING MATERIAL | SUS SINGLE PLATE | 10 | 0.93 | 1.00 | 1.08 | 1.00 |
| EXAMPLE 1 | CLADDING MATERIAL | SUS SINGLE PLATE | 20 | 1.03 | 1.00 | 1.00 | 0.67 |
| EXAMPLE 2 | CLADDING MATERIAL | SUS SINGLE PLATE | 40 | 0.93 | 0.91 | 0.80 | 0.50 |
| EXAMPLE 3 | CLADDING MATERIAL | SUS SINGLE PLATE | 60 | 1.03 | 0.93 | 0.59 | 0.17 |
| EXAMPLE 4 | CLADDING MATERIAL | SUS SINGLE PLATE | 90 | 0.98 | 1.02 | 0.50 | 0.33 |
| EXAMPLE 5 | CLADDING MATERIAL | SUS SINGLE PLATE | 140 | 0.96 | 1.00 | 0.63 | 0.33 |

In the joint structure using the SUS430 single plate of Comparative Example 1 (Al layer thickness: 0 µm), the joint strength was 1999 N, the melting width x1 was 54 µm, the penetration depth x2 was 123 µm, and the protrusion height x3 of the protrusion 1d was 30 µm, as shown in TABLE 1.

In the welded structure of Comparative Example 2 using the cladding material 1 for laser welding in which the thickness t2 of the Al layer 1a was 10 µm, the joint strength was 1859 N, the melting width x1 was 54 µm, the penetration depth x2 was 133 µm, and the protrusion height x3 of the protrusion 1d was 30 µm, as shown in TABLE 1. Furthermore, as shown in TABLE 2, regarding the comparison values with Comparative Example 1, the joint strength was 0.93, the melting width x1 was 1.00, the penetration depth x2 was 1.08, and the protrusion height x3 of the protrusion 1d was 1.00.

In the welded structure of Example 1 using the cladding material 1 for laser welding in which the thickness t2 of the Al layer 1a was 20 µm, the joint strength was 2066 N, the melting width x1 was 54 µm, the penetration depth x2 was 123 µm, and the protrusion height x3 of the protrusion 1d was 20 µm, as shown in TABLE 1. Furthermore, as shown in TABLE 2, regarding the comparison values with Comparative Example 1, the joint strength was 1.03, the melting width x1 was 1.00, the penetration depth x2 was 1.00, and the protrusion height x3 was the protrusion 1d was 0.67.

In the welded structure of Example 2 using the cladding material 1 for laser welding in which the thickness t2 of the Al layer 1a was 40 µm, the joint strength was 1865 N, the melting width x1 was 49 µm, the penetration depth x2 was 99 µm, and the protrusion height x3 of the protrusion 1d was 15 µm, as shown in TABLE 1. Furthermore, as shown in TABLE 2, regarding the comparison values with Comparative Example 1, the joint strength was 0.93, the melting width x1 was 0.91, the penetration depth x2 was 0.80, and the protrusion height x3 of the protrusion 1d was 0.50.

In the welded structure of Example 3 using the cladding material 1 for laser welding in which the thickness t2 of the Al layer 1a was 60 µm, the joint strength was 2054 N, the melting width x1 was 50 µm, the penetration depth x2 was 73 µm, and the protrusion height x3 of the protrusion 1d was 5 µm, as shown in TABLE 1. Furthermore, as shown in TABLE 2, regarding the comparison values with Comparative Example 1, the joint strength was 1.03, the melting width x1 was 0.93, the penetration depth x2 was 0.59, and the protrusion height x3 of the protrusion 1d was 0.17.

In the welded structure of Example 4 using the cladding material 1 for laser welding in which the thickness t2 of the Al layer 1a was 90 µm, the joint strength was 1961 N, the melting width x1 was 55 µm, the penetration depth x2 was 61 µm, and the protrusion height x3 of the protrusion 1d was 10 µm, as shown in TABLE 1. Furthermore, as shown in TABLE 2, regarding the comparison values with Comparative Example 1, the joint strength was 0.98, the melting width x1 was 1.02, the penetration depth x2 was 0.50, and the protrusion height x3 of the protrusion 1d was 0.33.

In the welded structure of Example 5 using the cladding material 1 for laser welding in which the thickness t2 of the Al layer 1a was 140 µm, the joint strength was 1921 N, the melting width x1 was 54 µm, the penetration depth x2 was 78 µm, and the protrusion height x3 of the protrusion 1d was 10 µm, as shown in TABLE 1. Furthermore, as shown in TABLE 2, regarding the comparison values with Comparative Example 1, the joint strength was 0.96, the melting width x1 was 1.00, the penetration depth x2 was 0.63, and the protrusion height x3 of the protrusion 1d was 0.33.

As described above, the joint strength of the laser-welded portion of the joint structure was slightly higher when the thickness t2 of the Al layer 1a was 20 µm (Example 1) and 60 µm (Example 3), and slightly lower when the thickness t2 of the Al layer 1a was 10 µm (Comparative Example 2), 40 µm (Example 2), 90 µm (Example 4), and 140 µm (Example 5), as compared with Comparative Example 1, which did not include an Al layer. Thus, it has been found that the joint strength of the laser-welded portion of the joint structure varies regardless of the thickness t2 of the Al layer 1a. This phenomenon in which the joint strength varies regardless of the thickness t2 of the Al layer 1a can also be confirmed by the plot of the joint strength and its approximate curve shown in FIG. 10. Furthermore, the degree of variation in joint strength is considered to be about 10%, based on the data shown in TABLE 2, in which the comparison values for the case with the Al layer 1a range from 0.93 (minimum) to 1.03 (maximum), with a fluctuation of 0.10 (-3% to +7%). From the above, it has been found that the joint strength of the laser-welded portion of the joint structure including the Al layer 1a is substantially equal to the joint strength of the laser-welded portion of the joint structure not including the Al layer, although there is a possibility of variation of about 10%, and is at a sufficiently practical level. Therefore, it has been found that the cladding material 1 for laser welding including the Al layer 1a is suitable for laser welding with another member made of an iron-based alloy from the viewpoint of the joint strength of the laser-welded portion of the joint structure using it.

Furthermore, as described above, the melting width x1 of the laser-welded portion of the joint structure was equal to the melting width x1 of Comparative Example 1 without an Al layer when the thickness t2 of the Al layer 1a was 10 µm (Comparative Example 2), 20 µm (Example 1), and 140 µm (Example 5). However, the melting width x1 was slightly larger when the thickness t2 of the Al layer 1a was 90 µm (Example 4), and slightly smaller when the thickness t2 of the Al layer 1a was 40 µm (Example 2) and 60 µm (Example 3). Thus, it has been found that the melting width x1 of the laser-welded portion of the joint structure varies regardless of the thickness t2 of the Al layer 1a. This phenomenon in which the melting width x1 varies regardless of the thickness t2 of the Al layer 1a can also be confirmed by the plot of the melting width x1 and its approximate curve shown in FIG. 10. Furthermore, the degree of variation in melting width x1 is considered to be about 10%, based on the data shown in TABLE 2, in which the comparison values for the case with the Al layer 1a range from 0.91 (minimum) to 1.02 (maximum), with a fluctuation of 0.11 (-9% to +2%). From the above, it has been found that the melting width x1 of the laser-welded portion of the joint structure including the Al layer 1a is substantially equal to the melting width x1 of the laser-welded portion of the joint structure not including the Al layer, although there is a possibility of variation of about 10%, and is at a sufficiently practical level. Therefore, it has been found that the cladding material 1 for laser welding including the Al layer 1a is suitable for laser welding with another member made of an iron-based alloy from the viewpoint of the melting width x1 of the laser-welded portion of the joint structure using it.

Furthermore, as described above, the penetration depth x2 of the laser-welded portion of the joint structure was equal to the penetration depth x2 of Comparative Example 1 without an Al layer when the thickness t2 of the Al layer 1a was 20 µm (Example 1). However, the penetration depth x2 was larger when the thickness t2 of the Al layer 1a was 10 µm (Comparative Example 2) and smaller when the thickness t2 of the Al layer 1a was 40 µm (Example 2) to 140 µm (Example 5). Furthermore, when looking at the comparison values with Comparative Example 1 shown in TABLE 2, a tendency can be confirmed in which the penetration depth x2 decreases as the thickness t2 of the Al layer 1a increases from 10 µm to 90 µm. Thus, it has been found that the penetration depth x2 of the laser-welded portion of the joint structure is affected by the thickness t2 of the Al layer 1a. This phenomenon in which the penetration depth x2 is affected by the thickness t2 of the Al layer 1a can also be confirmed by the plot of the penetration depth x2 and its approximate curve shown in FIG. 10. From the above, it has been found that the penetration depth x2 of the laser-welded portion of the joint structure including the Al layer 1a is affected by the thickness t2 of the Al layer 1a, is, for example, equal to or less than the penetration depth x2 of the joint structure without an Al layer (Comparative Example 1) when the thickness t2 of the Al layer 1a is 20 µm or more and 140 µm or less (Examples 1 to 5), and is smaller when the thickness t2 of the Al layer 1a is 40 µm or more and 140 µm or less (Examples 2 to 5). Therefore, it has been found that the cladding material 1 for laser welding in which the thickness t2 of the Al layer 1a is 20 µm or more and 140 µm or less (preferably 40 µm or more and 140 µm or less) is suitable for laser welding with another member made of an iron-based alloy from the viewpoint of the penetration depth x2 of the laser-welded portion of the joint structure using it.

In the joint structure in which the penetration depth x2 of the laser-welded portion is large, the molten cladding material 1 for laser welding may reach and solidify near a surface of another member (positive terminal) opposite to a surface to which the cladding material 1 for laser welding is laser-welded. In such a case, another member of which the mechanical strength is decreased may become more prone to cracking, and thus it is necessary to superfluously increase the thickness of another member. However, in the joint structures (Examples 1 to 5) in which the thickness t2 of the Al layer 1a is 20 µm or more and 140 µm or less, the penetration depth x2 is equal to or less than the penetration depth x2 of the joint structure without an Al layer (Comparative Example 1), and thus it is not necessary to superfluously increase the thickness of another member to be laser-welded. In particular, in the joint structures (Examples 2 to 5) in which the thickness t2 of the Al layer 1a is 40 µm or more and 140 µm or less, the penetration depth x2 is sufficiently smaller than the penetration depth x2 of the joint structure without an Al layer (Comparative Example 1), and thus the thickness of another member to be laser-welded can be further thinned. When looking at the approximate curve of the penetration depth x2 shown in FIG. 10, there is a tendency for the penetration depth x2 to increase as the thickness t2 of the Al layer 1a increases from 90 µm toward 140 µm. Therefore, it may not be preferable to increase the thickness t2 of the Al layer 1a beyond 140 µm. From this perspective, the cladding material 1 for laser welding in which the thickness t2 of the Al layer 1a is 140 µm or less is not excessively thick and can be placed in a smaller space, and thus the joint structure using this can be downsized.

As described above, the protrusion height x3 of the protrusion 1d of the joint structure was 30 µm when the thickness t2 of the Al layer 1a was 10 µm (Comparative Example 2), which was equal to the protrusion height x3 of Comparative Example 1, which did not include an Al layer, but was 20 µm or less when the thickness t2 of the Al layer 1a was 20 µm (Example 1) to 140 µm (Example 5), which was smaller than that of Comparative Example 1. Furthermore, when looking at the comparison values with Comparative Example 1 shown in TABLE 2, a tendency can be confirmed in which the protrusion height x3 decreases as the thickness t2 of the Al layer 1a increases from 10 µm to 140 µm. Thus, it has been found that the protrusion height x3 of the protrusion 1d of the joint structure is affected by the thickness t2 of the Al layer 1a. This phenomenon in which the protrusion height x3 is affected by the thickness t2 of the Al layer 1a can also be confirmed by the plot of the protrusion height x3 and its approximate curve shown in FIG. 10. From the above, it has been found that the protrusion height x3 of the protrusion 1d of the joint structure including the Al layer 1a is affected by the thickness t2 of the Al layer 1a, can be, for example, 20 µm or less, which is smaller than the protrusion height x3 of the joint structure without an Al layer (Comparative Example 1), when the thickness t2 of the Al layer 1a is 20 µm or more and 140 µm or less (Examples 1 to 5), and can be 15 µm or less, which is even smaller, when the thickness t2 of the Al layer 1a is 40 µm or more and 140 µm or less (Examples 2 to 5). Therefore, it has been found that the cladding material 1 for laser welding in which the thickness t2 of the Al layer 1a is 20 µm or more and 140 µm or less (preferably 40 µm or more and 140 µm or less) is suitable for laser welding with another member made of an iron-based alloy from the viewpoint of the protrusion height x3 of the protrusion 1d of the laser-welded portion of the joint structure using it.

When the protrusion height x3 of the protrusion 1d of the joint structure using the cladding material 1 for laser welding is small, the thickness is not excessively large, and thus it is possible to reduce the space required for placement. Furthermore, the protrusion 1d is less likely to contact members other than the cladding material for laser welding and be damaged, and thus it is possible to reduce or prevent the risk of instability in the operation of the joint structure and the assembled battery due to damage to the protrusion 1d. From this perspective, the cladding material 1 for laser welding, in which the thickness t2 of the Al layer 1a is 20 µm or more and 140 µm or less such that the protrusion height x3 of the protrusion 1d of the joint structure is 20 µm or less, or preferably the thickness t2 of the Al layer 1a is 40 µm or more and 140 µm or less such that the protrusion height x3 of the protrusion 1d is 15 µm or less, is suitable for laser welding with another member made of an iron-based alloy and is also advantageous for downsizing the joint structure using this.

From the above, the inventors of the present invention have discovered, based on the evaluation results of the joint strength, the melting width x1, the penetration depth x2, and the protrusion height x3 of the protrusion 1d of the laser-welded portion of the joint structure in which the cladding material 1 for laser welding and another member are joined by laser welding, that the cladding material 1 for laser welding, in which the thickness t2 of the Al layer 1a is 20 µm or more and 140 µm or less, can reduce the space required for placement and is suitable for laser welding involving joining dissimilar metals with another member made of an iron-based alloy, and the joint structure using this can be downsized.

### Modified Examples

The embodiment and Examples disclosed this time must be considered as illustrative in all points and not restrictive. The scope of the present invention is not shown by the above description of the embodiment and Examples but by the scope of claims for patent, and all modifications (modified examples) within the meaning and scope equivalent to the scope of claims for patent are further included.

For example, while the configuration example in which the cladding material 1 for laser welding is used for the assembled battery 100 has been shown in this embodiment, the present invention is not limited to this. In the present invention, for example, the cladding material 1 for laser welding may be used for purposes other than the assembled battery 100, such as in-vehicle electrical and electronic circuit boards.

While the configuration example in which the cladding material 1 for laser welding is wire-bonded to the busbar 20 has been shown in this embodiment, the present invention is not limited to this. In the present invention, the cladding material 1 for laser welding may be used in a configuration in which the cladding material 1 for laser welding is joined to the busbar 20 by laser welding, for example.

While the configuration example in which in the cladding material 1 for laser welding, the thickness t2 of the Al layer 1a shown in FIG. 2 is smaller than the thickness t3 of the Fe layer 1b has been shown in this embodiment, the present invention is not limited to this. In the present invention, in the cladding material 1 for laser welding, the thickness t2 of the Al layer 1a may be equal to or larger than the thickness t3 of the Fe layer 1b, for example.

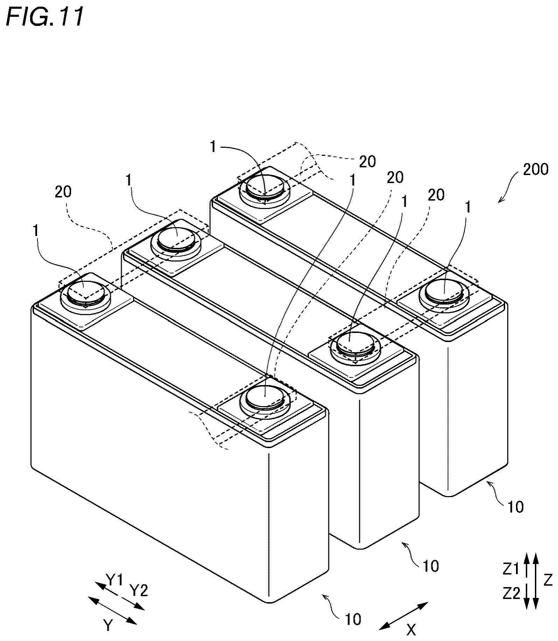

While the configuration example in which the cladding material 1 for laser welding is used for the cylindrical lithium-ion secondary battery 10 shown in FIG. 6 has been shown in this embodiment, the present invention is not limited to this. In the present invention, the cladding material 1 for laser welding may be used for a square lithium-ion secondary battery 10, as shown in FIG. 11.

While the configuration example in which the Fe layer 1b of the cladding material 1 for laser welding is laser-welded to the lid member 12 (battery terminal member) made of an iron-based alloy, which is the positive terminal, has been shown in this embodiment, the present invention is not limited to this. In the present invention, the Fe layer 1b of the cladding material 1 for laser welding may be laser-welded to the housing that also defines and functions as the negative terminal, for example.

While the configuration example in which the Fe layer 1b of the cladding material 1 for laser welding is directly laser-welded to the lid member 12 (battery terminal member) has been shown in this embodiment, the present invention is not limited to this. In the present invention, another component may be provided between the Fe layer 1b of the cladding material 1 for laser welding and the lid member 12. In such a case, another component provided between the Fe layer 1b of the cladding material 1 for laser welding and the lid member 12 serves as a battery terminal member.

### Description of Reference Numerals

1: cladding material for laser welding
1a: Al layer
1b: Fe layer
1c: exposed surface
1d: protrusion
1e: joint surface
12: lid member (another member, battery terminal member)
20: busbar
50a: Al plate material
50b: Fe plate material
100: assembled battery (battery)

## Claims

1. A cladding material (1) for laser welding, the cladding material to be laser-welded to another member made of an iron-based alloy, the cladding material comprising:
an Al layer (1a) made of pure aluminum or an aluminum alloy; and
an Fe layer (1b) made of an iron-based alloy and roll-bonded to the Al layer; wherein
the Al layer has a thickness of 20 µm or more and 140 µm or less; and
the Fe layer is laser-welded to the another member by laser irradiation from a side of the Al layer.

2. The cladding material for laser welding according to claim 1, wherein the thickness of the Al layer is 40 µm or more and 140 µm or less.

3. A joint structure using a cladding material (1) for laser welding, the joint structure comprising:
the cladding material for laser welding including an Al layer (1a) made of pure aluminum or an aluminum alloy and having a thickness of 20 µm or more and 140 µm or less, and an Fe layer (1b) made of an iron-based alloy and roll-bonded to the Al layer; and
another member made of an iron-based alloy and laser-welded to the Fe layer; wherein
the Fe layer is laser-welded to the another member by laser irradiation from a side of the Al layer.

4. The joint structure using the cladding material for laser welding according to claim 3, wherein a molten portion formed at a joint surface between the Fe layer and the another member joined by laser welding has a length of 40 µm or more and 140 µm or less in a direction in which the joint surface extends.

5. The joint structure using the cladding material for laser welding according to claim 3, wherein a protrusion formed on an exposed surface of the Al layer opposite to a surface to which the Fe layer is roll-bonded by laser irradiation from the side of the Al layer has a protrusion height of 20 µm or less.

6. The joint structure using the cladding material for laser welding according to claim 5, wherein
the thickness of the Al layer is 40 µm or more and 140 µm or less; and
the protrusion height of the protrusion formed on the exposed surface of the Al layer opposite to the surface to which the Fe layer is roll-bonded by laser irradiation from the side of the Al layer to a side of the Fe layer is 15 µm or less.

7. A method for manufacturing a battery (100), the method comprising:
preparing a cladding material (1) for laser welding including an Al layer (1a) having a thickness of 20 µm or more and 140 µm or less, and an Fe layer (1b) by roll-bonding an Al plate material (50a) made of pure aluminum or an aluminum alloy and an Fe plate material (50b) made of an iron-based alloy;
joining a battery terminal member (12) made of an iron-based alloy to the Fe layer by laser irradiation from a side of the Al layer to a side of the Fe layer; and
joining a busbar (20) made of pure aluminum or an aluminum alloy to the Al layer.
